# EUROPEAN PATENT APPLICATION

(11) **EP 1 340 650 A2**
(43) Date of publication of application: **03.09.2003**
(21) Application number: 03075479.0
(22) Date of filing: 19.02.2003
(51) Int. Cl.: B60P 3/34

(54) **Extendable roof mounted camping unit for motor vevicles**

(30) Priority: 28.02.2002 IT VA20020018
(71) Applicant: De Bellis, Giuseppe, 20051 Limbiate (IT); Spinoso, Cristina, 20051 Limbiate (IT)
(72) Inventor: De Bellis, Giuseppe, 20051 Limbiate (IT); Spinoso, Cristina, 20051 Limbiate (IT)
(74) Representative: Riccardi, Sergio

(57) **Abstract**

An extensible imperial for motor vehicles is disclosed which allows to make an additional habitable upper cabin, comprising a container fixed to the vehicle's roof, whose top can be lifted through appropriate mechanisms, by simultaneously unfolding the side walls in order to form said upper cabin of such a height that a standing up person can access it.

## Description

The present invention is about an extensible imperial for motor vehicles, that is a cabin applied on the vehicle's roof, suitable for housing the passenger also in the upright position, thus becoming a second floor or a night compartment.

The question of the overnight stay while travelling and/or vacationing is becoming increasingly serious both from an economic perspective and of the lodgings availability. As a matter of fact, due to the raising people's mobility and to the increasing costs of the hotels, the use of one's own vehicle for lodging and sleeping is becoming increasingly more convenient and popular.

Nevertheless the solutions planned up to now have several inconveniences. The easiest solution is that of the tent over the roof of the motor vehicle, that offers a very limited space, does not allow the person to stay upright, requires an outer ladder and can be used only for either sleeping or resting.

Campers and trailers, despite the high costs, have their own lodging section, almost entirely filled up by the bed or more beds. Furthermore, if the beds are located in a cabin, they could only be reached by crawling to it.

Only the true semi-mobile houses or towed caravans offer the comfort and the space for a true habitability, but in this case the costs are very high and such means of transportation require a great driving ability and also an upper class driving license.

The present invention brilliantly solves this heartfelt problem, by providing an extensible imperial when the vehicle is stopped, thus providing a true additional room made on the roof of the vehicle, accessible from inside of the same vehicle, and therefore with a great anti-intrusion security feature.

This revolutionary transportation lodging system can be also applied indiscriminately to any vehicle and/or tow such as a campers, caravans, vans, trailers, sport utility vehicles and minivans, trucks, and motor vehicles in general, always using the inventive principle which will be described hereafter.

The extensible imperial which represents the present invention basically consists of a baggage-rack type container, fixed to the vehicle's roof, whose top can be lifted through appropriate and various mechanisms, by simultaneously unfolding the flexible or folding side walls, which are housed into the room of the container when it is closed, until forming a true additional cabin or floor of such a height that a person can access it in the upright position. The lifting mechanisms can take up several shapes, such as manually driven or motorized telescopic vertical rods, scissor lifting devices, hydraulic jacks and similar systems, like systems with telescopic hydraulic or pneumatic pistons driven by a corresponding motorized pump, placed inside of the vehicle or into an appropriate shielded outer case.

The access to the upper cabin will take place inside of the vehicle itself through an appropriate ladder and a trap door which could also be represented by the same vehicle's sun roof.

For greater safety, the vehicle can also be equipped with retractable support and anchorage legs.

Some embodiments of the invention will be now meticulously described in an explanatory but not limiting way, with reference to drawings, wherein:
Figure 1 is a top view of the back side of a van equipped with an imperial in the extended position;
Figure 2 is a diagrammatic view of one of the lifting devices applicable and shown in figure 1;
Figure 3 is a side view of a camper equipped with a similar imperial to that of figure 1, but in the closed position;
Figure 4 is a side view of a minivan equipped with a similar imperial to that of figures 1 - 3, in the closed position but equipped with a different lifting device; and;
Figure 5 is a side view of a camper equipped with an upper room with a balcony.

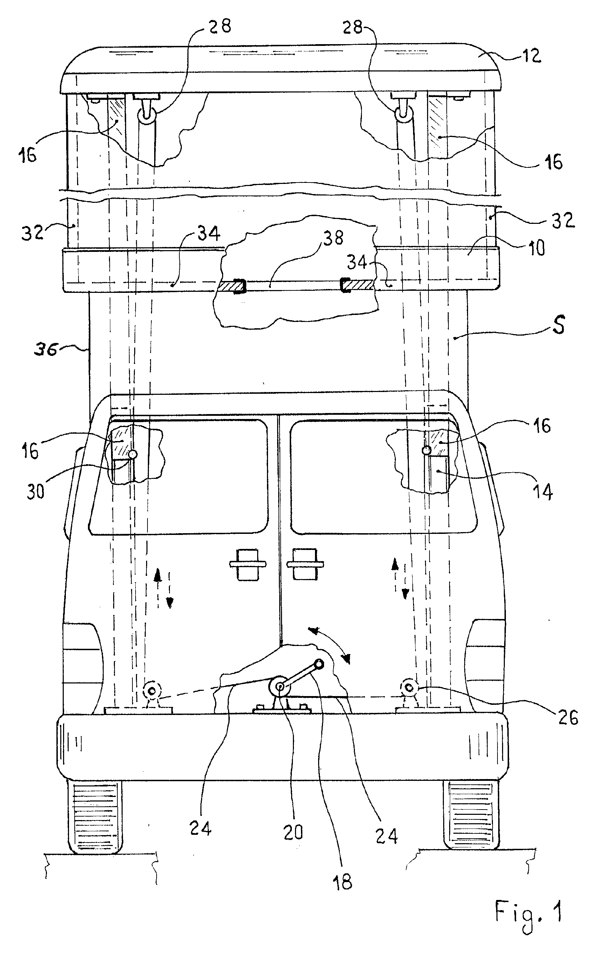

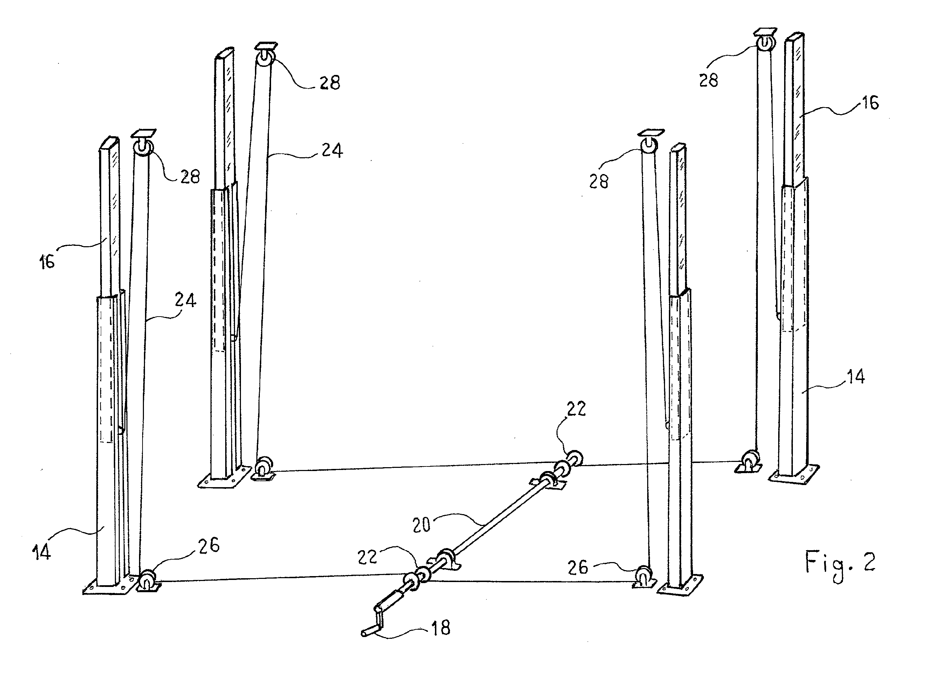

Making reference first to figure 1, the motor vehicle represented in this case by a van, has a container 10 fixed on its roof equipped with a roof or top 12 which can be lifted through a telescopic mechanism consisting of four box-type uprights 14 fixed to the vehicle's floor, wherein as many vertical rods 16 can slide fixed to the inner side of the top 12. The sliding of the vertical rods 16 is achieved through a system of pulleys, shown in details in figure 2, driven by a manual control handle 18 that could be also replaced by a motorized unit. The handle 18, preferably placed on one of the vehicle's sides, makes a control rod 20 rotate equipped with a reel 22 for winding the cables 24 which through lower return pulleys 26 fixed to the top 12 of the container 10, are connected to the base 30 of the sliding vertical rods 16, by lifting or lowering the top for a stretch enough to create a true additional upper cabin, whose side walls 32 are made of single or double waterproof sheets like tents, that when closing the top they get back into the container's van by folding into layers, or imbricated flexible blades, mutually fastening lifting panels by forming true rigid walls equipped also with pit holes or small windows, and other similar systems.

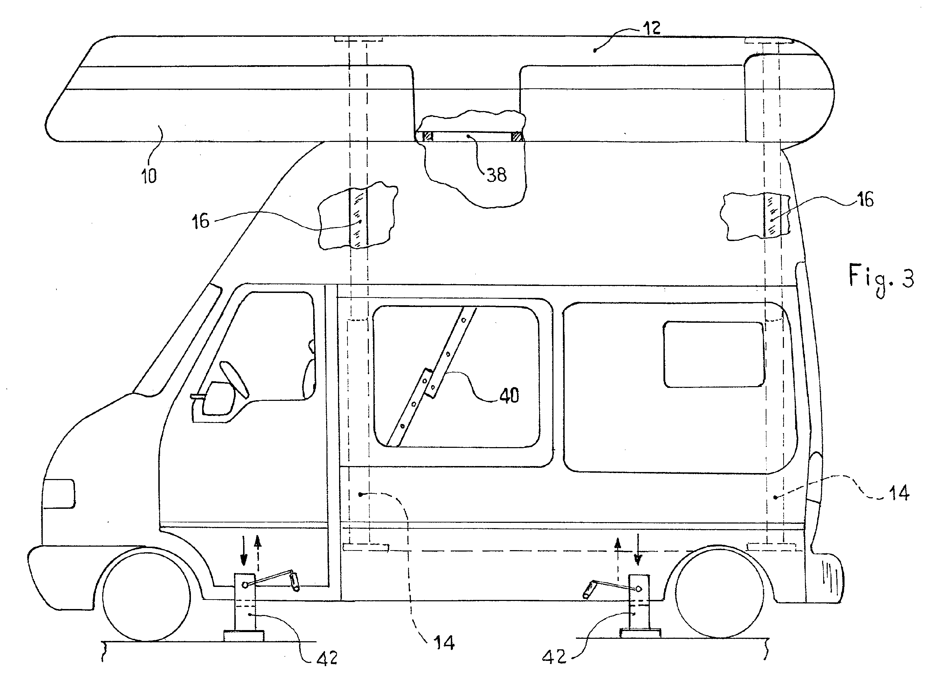

The beds separated by a central aisle are placed for example in the upper cabin. The access to the cabin is accomplished by a trap door 38 on the vehicle's roof and by a ladder 40 preferably of the folding retractable kind like those used in the lofts (figure 3) or fixed spiral staircase, whenever the used transportation means' size allows it. For greater safety, the vehicle is preferably equipped with retractable support and anchorage legs 42 (figure 3) in order to discharge the weight of the vehicle to the ground and thus avoiding to flip over.

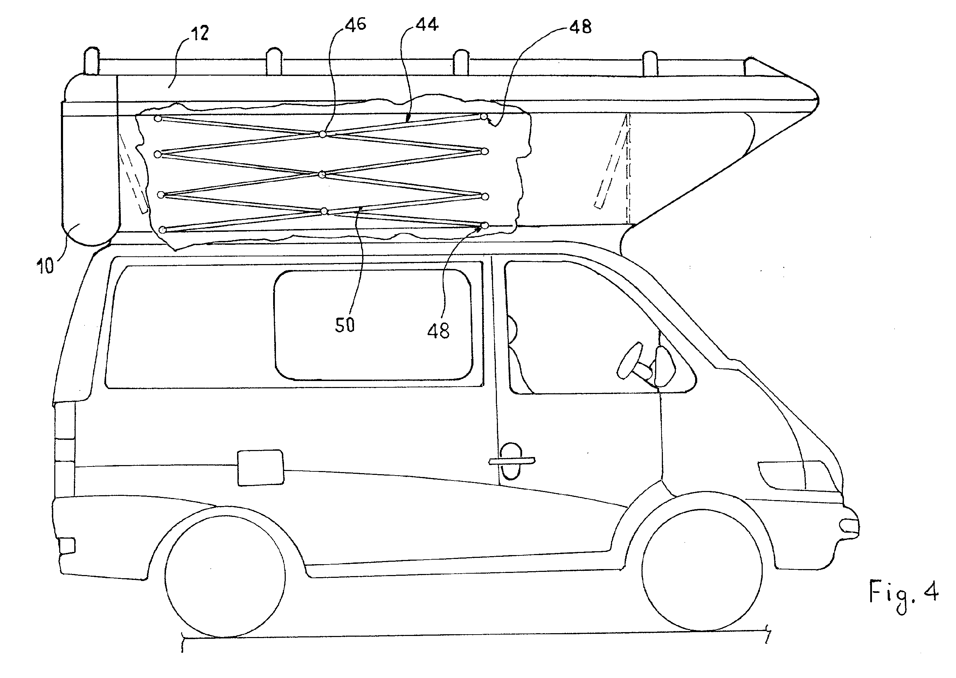

In figure 4 a scissor system for the lifting of the top 12 is illustrated whose mechanical operation is well known for example from lifting apparatuses for car shops, also known as hydraulic platforms. The pantograph comprises four-bar linkage 44 articulated to the center 46 and to the ends 48 of the arms 50, the lower arms being connected in an articulated manner to the bottom of the container 10 and the upper arms to the top 12. The operation is clear and similar to the telescopic one of figure 2.

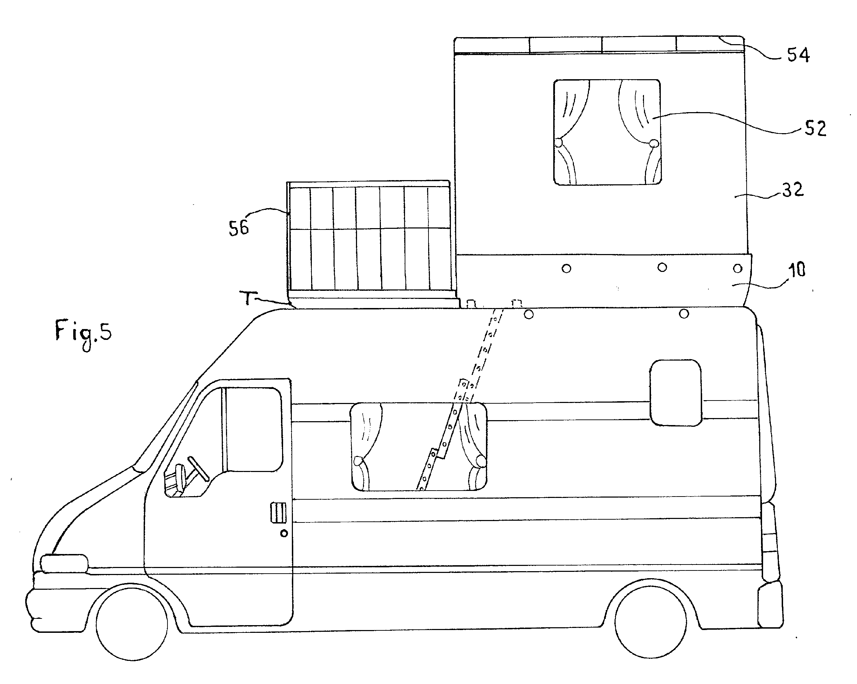

At last figure 5 shows a vehicle wherein the structure of the upper cabin takes up only part of the vehicle's original roof, while the remaining part of the roof is taken up by a balcony or terrace T equipped with an appropriate light alloy railing 56 that in the driving configuration can be folded in the closed position on the roof.

The top or roof of the upper cabin, in all the different versions, could be made of a bearing and walking over structure and function as baggage-rack 54. The walls 32 of the upper cabin can be equipped with pit holes or windows 52 of a suitable transparent material.

The structure, once lifted and fixed, forms a single stable body and secured to the vehicle. The structure will be equipped with cooling and heating nozzles with appropriate heaters or air conditioning systems, in addition to the night lighting set. Furthermore, the whole structure in its various versions will be equipped with alarm systems to warn the driver of any flaw in the closing of the structure when the vehicle is moving.

From what has been previously said it is clear how the invention's preset objects are fully achieved, but it must be understood that a field expert can bring numerous modifications, variations, substitutions, and additions according to the needs and circumstances of its production and use, without falling out of the scope of protection of the invention as also recited in the following appended claims.

## Claims

1. An extensible imperial for motor vehicles, **characterized by** comprising a container fixed to the vehicle's roof, whose top can be lifted through appropriate mechanisms, by simultaneously unfolding the side walls housed into the container's room when it is closed, thus forming an upper cabin of such a height that a standing up person can access it.

2. The extensible imperial according to claim 1, **characterized in that** the lifting mechanisms consist of telescopic vertical rods which slide on guides fixed into the vehicle's floor, said vertical rods being driven through a manual or motorized system of pulleys.

3. The extensible imperial according to claim 1, **characterized in that** the lifting mechanisms consist of either scissor lifting devices on the body's sides, or other hydraulic or pneumatic systems.

4. The extensible imperial according to claim 1, **characterized in that** the side walls are made of tent's sheets or folding blades, or even extensible panels get back into the container when the latter is closed.

5. The extensible imperial according to claim 1, **characterized in that** the access to the upper cabin takes place inside of the vehicle through a trap door and a ladder.

6. The extensible imperial according to claim 1, **characterized in that** the vehicle is equipped with retractable support and anchorage legs in order to improve its stability when the upper cabin is open.

7. The extensible imperial according to one or more of the previous claims, **characterized in that** the top is made of a bearing and walking over structure and functions as a roof equipped with a baggage-rack.

8. The extensible imperial according to one or more of the previous claims, **characterized in that** the structure is equipped with an alarm signal in order to warn potential closing flaws of the structure when the vehicle is moving.

9. The extensible imperial according to one or more of the previous claims, **characterized in that** the upper cabin takes up only a section of the surface of the vehicle's roof, while the remaining part is taken up by a balcony or terrace with a railing folding in the driving configuration.

10. The extensible imperial for motor vehicles, basically as previously described and as shown in the drawings of the annexed sheets, for the abovementioned objects.
